# EUROPEAN PATENT APPLICATION

(11) **EP 1 612 988 A1**
(43) Date of publication of application: **04.01.2006**
(21) Application number: 05254023.4
(22) Date of filing: 27.06.2005
(51) Int. Cl.: H04L 9/08, G11B 20/00, H04N 7/167

(54) **Apparatus and/or method for encryption and/or decryption for multimedia data**

(30) Priority: 01.07.2004 KR 2004051009
(71) Applicant: Samsung Electronics Co., Ltd., Suwon-si, Gyeonggi-Do (KR)
(72) Inventor: Choi, Yun-ho, Seoul (KR); Kim, Ynn-sang, 616-402 Youwon Boseong Apt., Gyeonggi-do (KR); Choi, Yang-Iim, 112-2403 Kachimaeul, Seongnam-si, Gyeonggi-do (KR)
(74) Representative: Brandon, Paul Laurence

(57) **Abstract**

A multimedia device having an encryption module (1), which prevents an encryption key from being exposed to the outside, is provided. The multimedia device includes; a key processing unit (310), which generates and manages an encryption key; and a data processing unit (320), which encrypts/decrypts content with the encryption key. Both the key processing unit and the data processing unit (310) are located in the encryption module (1). The encryption module (1) can generate an encryption key and encrypt content with the encryption key, independently of an external device, such as a CPU. In addition, the encryption module (1) encrypts the encryption key before transmitting the encryption key to the CPU to record the encryption key on a storage medium. Therefore, it is possible to protect the content and the encryption key from hacking threats by preventing the encryption key from being exposed to the outside of the encryption module.

## Description

The present invention relates to multimedia devices having an encryption module and to methods of encryption and decryption.

In accordance with the growth of the number of users of multimedia devices, such as digital TVs, DVD recording/reproducing devices, personal video recorders (PVRs), or MP3 players, various efforts have been made to protect multimedia content written on a storage medium installed in a multimedia device or an external storage medium. As part of the various efforts, a multimedia device having an encryption module, has been developed to protect multimedia content.

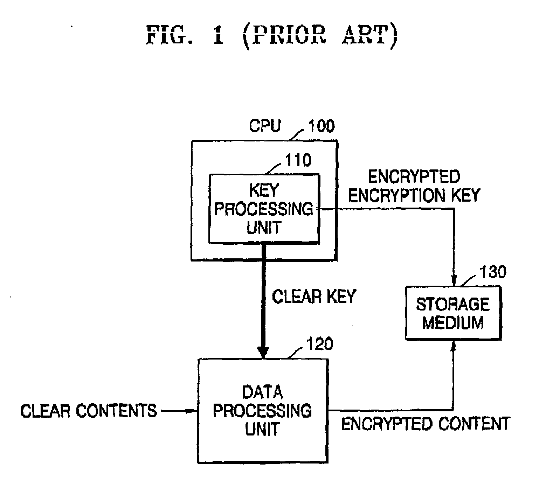

FIG. 1 is a block diagram of a conventional multimedia device. Referring to FIG. 1, the conventional multimedia device includes a key processing unit 110, which generates a key (hereinafter, referred to as an encryption key) for encrypting content, a data processing unit 120, which encrypts the content using the encryption key generated by the key processing unit 110, a storage medium 130, on which the encrypted content is recorded, and a central processing unit (CPU) 100, which executes a program that controls the encryption of the content of interest.

In the conventional multimedia device, such as a PVR, the key processing unit 110 is realized as software loaded in the CPU 100 so that it can be executed by the CPU 100. The key processing unit 110 generates an encryption key and transmits the encryption key to the data processing unit 120. Here, the encryption key transmitted from the key processing unit 110 to the data processing unit 120 is a clear key, which is a key yet to be encrypted. Thus, there is a great possibility of the encryption key being exposed to the outside of the multimedia device in the process of being transmitted from the CPU 100 to the data processing unit 120.

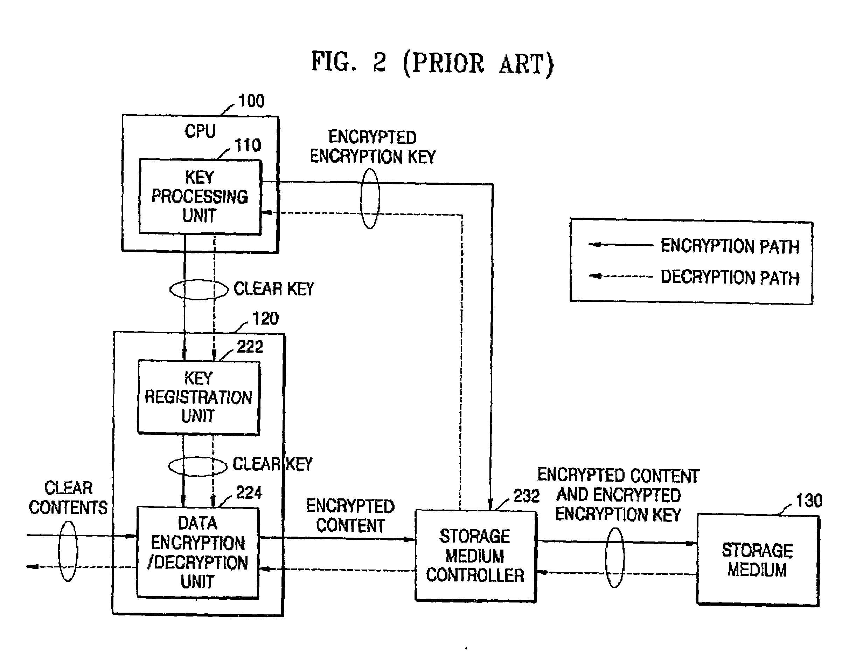

FIG. 2 is a detailed block diagram of the conventional multimedia device of FIG. 1. Referring to FIG. 2, the conventional multimedia device includes the CPU 100, which includes the key processing unit 110, the data processing unit 120, which includes a key registration unit 222 and a data encryption/decryption unit 224, the storage medium 130, and a storage medium controller 232. The key processing unit 110, which generates and then encrypts an encryption key so that the encryption key can be recorded on the storage medium 130, may be realized as software, e.g., a program. The data encryption/decryption unit 224 encrypts the multimedia content by using an encryption/decryption algorithm, such as DES, AES, or C2. The encryption key encrypted by the key generation/encryption program 110 Is registered with the key registration unit 222.

The operation of the conventional multimedia device will now be described in further detail. In order to record multimedia content, such as a broadcast program, on the storage medium 130, the conventional multimedia device transmits clear content, which is multimedia content yet to be encrypted, to the data processing unit 120. The CPU 100 generates an encryption key and transmits the encryption key to the key registration unit 222 of the data processing unit 120. In addition, the CPU 100 encrypts the encryption key and then stores the encrypted encryption key in the storage medium 130 as a file so that the encrypted encryption key can be used later for reproducing encrypted content. These processes performed in the CPU 100 are called key processing. The data processing unit 120 encrypts the clear content using the encryption key received from the CPU 100, the process which is called data processing.

As described above, in the conventional multimedia device, key processing and data processing are executed by separate modules. Therefore, there is a great possibility of a clear key being exposed to the outside of the conventional multimedia device in the process of being transmitted from the CPU 100 to the data processing unit 120. Here, the clear key is an encryption key that is generated by the key processing unit 110 and is yet to be encrypted,

Even if the CPU 100 encrypts the encryption key and then transmits the encrypted encryption key to the data processing unit 120, there is still a possibility of the encryption key being exposed to the outside of the conventional multimedia device because the key processing unit 110 Is a software program easily accessible by an external device.

Additional aspects and/or advantages of the invention will be set forth in part in the description which follows and, in part, will be apparent from the description, or may be learned by practice of the invention.

Preferred embodiments of the present invention provide a multimedia device having an encryption module, which prevents an encryption key from being exposed to the outside of the multimedia device.

Preferred embodiments of the present invention also provide encryption and decryption methods, which prevent an encryption key from being exposed to the outside of the multimedia device.

According to an aspect of the present invention, there is provided a multimedia device having an encryption module, including: a key processing unit, which generates and manages an encryption key; and a data processing unit, which encrypts/decrypts content with the encryption key, wherein both the key processing unit and the data processing unit are located in the encryption module.

The multimedia device may also include: a storage medium, on which the content encrypted with the encryption key is recorded; and a controller, which controls recording/reproducing the content on/from the storage medium.

The key processing unit may generate the encryption key by using part of the content as a seed value for generating a random number or a sequence of random numbers.

The key processing unit may transmit the encryption key to the data processing unit, and the data processing unit may encrypt the content with the encryption key received from the key processing unit.

The key processing unit may encrypt the encryption key and then register the encrypted encryption key with a key registration unit in the encryption module, and transmit the encrypted encryption key to the controller so that the encrypted encryption key can be recorded on the storage medium to be used later for decrypting the content encrypted with the encryption key.

When decrypting the content encrypted with the encryption key, it may be determined whether the storage medium is an authorized storage medium by determining through comparison whether an encrypted encryption key that is a match for the encrypted encryption key recorded on the storage medium, is registered in the key registration unit.

If an encrypted encryption key that is a match for the encrypted encryption key recorded on the storage medium, is registered in the key registration unit, the key processing unit may decrypt the encrypted encryption key, and the data processing unit may decrypt the content encrypted with the encryption key using the decrypted result.

The key processing unit may encrypt and/or decrypt the encryption key with an embedded key and record and/or read the encryption key encrypted and/or decrypted with the embedded key on and/or from the storage medium under control of the controller.

The embedded key may be generated using a unique key designated by the encryption module, and/or an identifier of the storage medium.

According to another aspect of the present invention, there is provided an encryption method which is performed in a multimedia device having an encryption module and encrypts content, the encryption method including: generating an encryption key in the encryption module; encrypting the encryption key in the encryption module; encrypting the content with the encryption key in the encryption module; and recording the content encrypted with the encryption key on a storage medium which is separated from the encryption module.

The encrypting of the encryption key and the encrypting of the content with the encryption key may be performed at the same time.

In the generating of the encryption key, a part of the content may be used as a seed value for generating a random number or a sequence of random numbers.

In the encrypting of the encryption key, the encryption key may be encrypted by using an embedded key.

The embedded key may be generated using a unique key designated by the encryption module, and/or an identifier of the storage medium.

According to another aspect of the present invention, there is provided a decryption method which is performed in a multimedia device having an encryption module and which decrypts content recorded on a storage medium, the decryption method including: determining whether the storage medium is an authorized storage medium by determining through comparison whether an encrypted encryption key that is a match for an encrypted encryption key recorded on the storage medium, is registered in the encryption module; decrypting the encrypted encryption key in the encryption module if the storage medium is an authorized storage medium; and decrypting the content with the decrypted encryption key.

The present invention will become apparent and more readily appreciated from the following description of the embodiments, by way of example only, taken in conjunction with the accompanying drawings of which:
FIG. 1 is a block diagram of a conventional multimedia device;
FIG. 2 is a detailed block diagram of the conventional multimedia device of FIG. 1;
FIG. 3 is a block diagram of a multimedia device having an encryption module according to an embodiment of the present invention;
FIG. 4 is a detailed block diagram of a multimedia device having an embodiment of the encryption module of FIG. 3;
FIG. 5 is a detailed block diagram of a multimedia device having another embodiment of the encryption module of FIG. 3;
FIG. 6 is a flowchart of an encryption method according to an embodiment of the present invention; and
FIG. 7 is a flowchart of a decryption method according to an embodiment of the present Invention.

Reference will now be made in detail to the embodiments of the present invention, examples of which are illustrated in the accompanying drawings, wherein like reference numerals refer to the like elements throughout. The embodiments are described below to explain the present invention by referring to the figures.

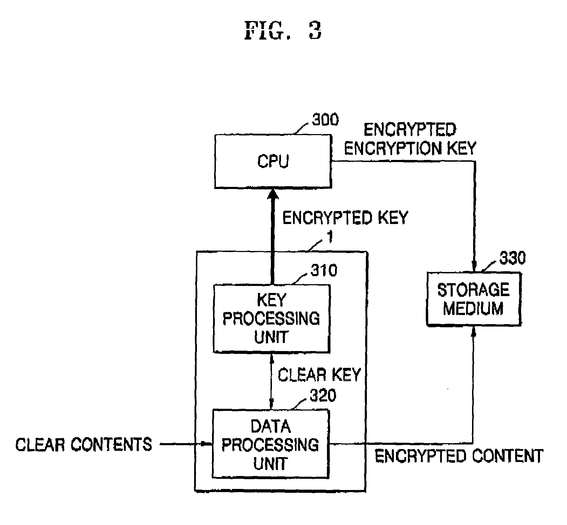

FIG. 3 is a block diagram of a multimedia device having an encryption module 1 according to an embodiment of the present invention. Referring to FIG. 3, the multimedia device includes the encryption module 1 to prevent an encryption key and the encryption of the multimedia content itself from being exposed to the outside of the multimedia device. As described above, the conventional multimedia device of FIG. 1 or 2 cannot prevent the encryption key from being exposed to the outside because the key processing unit 110 and the data processing unit 120 are separate. In contrast, the multimedia device of FIG. 3 can prevent the encryption key from being exposed to the outside because a key processing unit 310 and a data processing unit 320 are located together in the encryption module 1.

Referring to FIG. 3, the encryption module 1 includes the key processing unit 310 and the data processing unit 320. Accordingly, the encryption key generated by the key processing unit 310 can be transmitted to the data processing unit 320 without any possibility of being exposed to the outside of the multimedia device. In addition, the encryption key is encrypted, transmitted to the CPU 300, and then recorded on a storage medium 330. Thus, it is possible to efficiently protect multimedia data and the encryption key, with which the multimedia data is encrypted, from possible external attacks. In other words, the multimedia content and the encryption key are encrypted before being transmitted to their respective destinations so as to prevent them from being exposed to the outside of the multimedia device and from being intercepted by an unauthorized user.

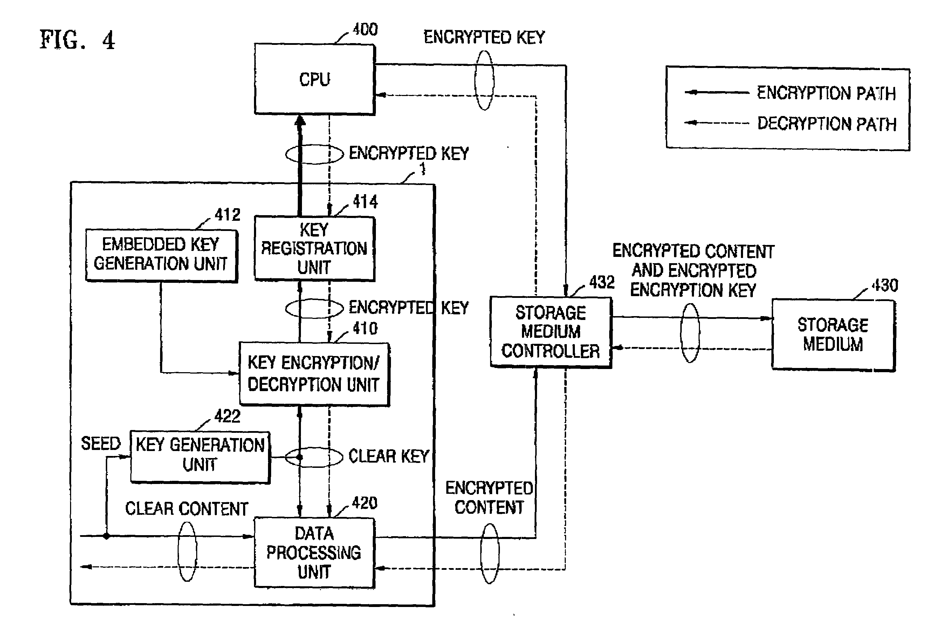

FIG. 4 is a detailed block diagram of a multimedia device having an example of the encryption module 1 of FIG. 3. Referring to FIG. 4, the encryption module 1 includes a key generation unit 422, an embedded key generation unit 412, a key encryption/decryption unit 410, a key registration unit 414, and a data encryption/decryption unit 420.

The key generation unit 422 generates an encryption key using a random number generator (RNG), particularly, a hardware RNG. The hardware RNG is not a genuine RNG but a pseudo RNG because it is likely to generate a sequence of random numbers with a discernible pattern in the random numbers.

In order to address the problem with the hardware RNG, the key generation unit 422 uses a part of the content as a seed value for the RNG so that it can generate an encryption key composed of a sequence of numbers with no or little discernible pattern in the numbers (i.e., a sequence of genuine random numbers) because the seed value for the RNG varies depending on a bitstream of input content. The encryption key generated by the key generation unit 422 is transmitted to the data encryption/decryption unit 420, which encrypts content with the encryption key, and to the key encryption/decryption unit 410, which encrypts the encryption key. The encryption key is a clear key when generated. There is no possibility of the encryption key being exposed to the outside of the encryption module 1 because the data encryption/decryption unit 420 and the key encryption/decryption unit 410 are located together in the encryption module 1.

The key encryption/decryption unit 410 encrypts the encryption key received from the key generation unit 422 before transmitting the encryption to the outside of the encryption module 1. More specifically, the encryption key is necessary not only when encrypting the content but also when reproducing the content encrypted with it. Thus, the encryption key is transmitted to the CPU 400 outside the encryption module 1 so that it can be recorded on the storage medium 430. The key encryption/decryption unit 410 encrypts the encryption key and then transmits the encrypted encryption key to the CPU 400, rather than to transmit the encryption key to the CPU 400 without encrypting the encryption key, in order to prevent the encryption from being undesirably exposed to or intercepted by an unauthorized user. The CPU 400 records the encrypted encryption key on the storage medium 430 with the help of a storage medium controller 432.
When reproducing the content, the CPU 400 reads the encrypted encryption key from the storage medium 430 and then transmits the encrypted encryption key to the encryption module 1.

The encryption key, like the content, needs a key, which is called an embedded key, to be encrypted. The embedded key is generated by the embedded key generation unit 412.

The encryption key encrypted with the embedded key is registered with the key registration unit 414**.** In addition, the encryption key encrypted with the embedded key is transmitted to the CPU 400 and then stored in the storage medium 430. When reproducing the content encrypted with the encryption key, it is determined whether the storage medium 430 is an authorized storage medium by determining whether there Is a match for the encryption key recorded on the storage medium 430 in the key registration unit 414 through comparison.

The data encryption and/or decryption unit 420 encrypts the content with the encryption key generated by the key generation unit 422. The content encrypted with the encryption key is recorded on the storage medium 430 via the storage medium controller 432. Accordingly, the encryption key and the content encrypted with the encryption key are recorded together on the storage medium 430. The data encryption and/or decryption unit 420 may encrypt the content with the encryption key using various encryption engines based on such encryption algorithms as DES, AES, and C2. The data encryption/decryption unit 420 may encrypt the content with the encryption key using a block cipher which is famous for its high operating speed.

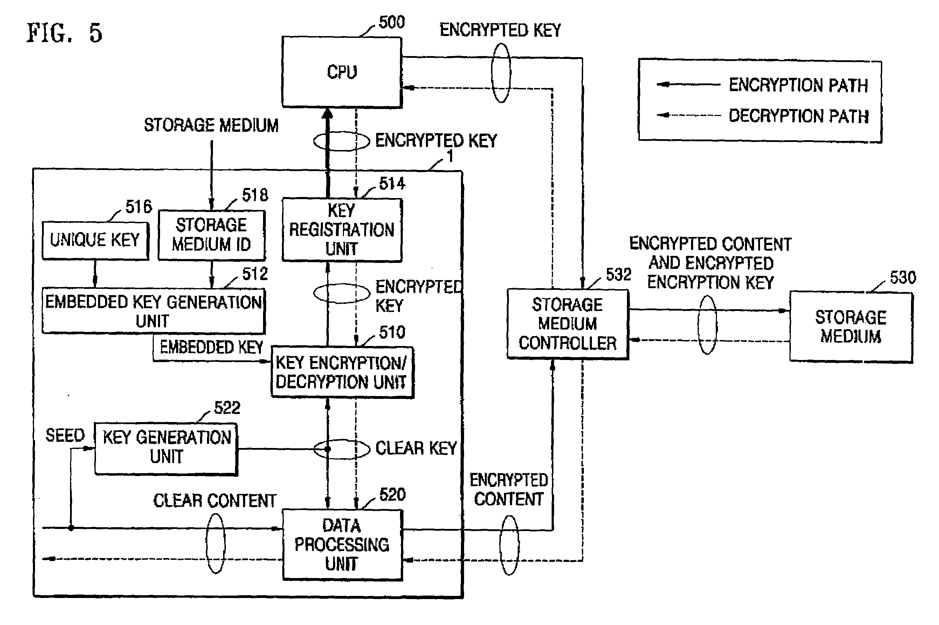

FIG. 5 is a detailed block diagram of a multimedia device having another example of the encryption module 1 of FIG. 3., according to an embodiment of the present invention. Referring to FIG. 5, the encryption module 1 includes a key generation unit 522, an embedded key generation unit 512, a key encryption and/or decryption unit 510, a key registration unit 514, and a data encryption and/or decryption unit 520. The key generation unit 522, the embedded key generation unit 512, the key encryption and/or decryption unit 510, the key registration unit 514, and the data encryption and/or decryption unit 520 are very similar to their respective counterparts of FIG. 4.

The embedded key generation unit 512 generates an embedded key by using a unique key 516, which is a unique value designated to the encryption module 1, and/or a storage medium identifier (ID) 518, which is a unique value designated to a storage medium 530. More specifically, the embedded key generation unit 512 generates the unique key 516 using a typical one-time password (OTP) method. Alternatively, the embedded key generation unit 512 generates the unique key 516 designating a fixed value to the encryption module 1. Thereafter, the embedded key generation unit 512 generates the embedded key using the unique key 516 and/or the storage medium ID 518.

The embedded key generation unit 512 can generate a variety of embedded keys by using the unique key 516and/or the storage medium ID 518. The embedded key generation unit 512 may adopt various methods to generate an embedded key. For example, the embedded key generation unit 512 can generate an embedded key performing an XOR operation on the unique key 516 and the storage medium ID 518 or performing the four arithmetical operations on the unique key 516 and the storage medium ID 518.

As described above, the multimedia devices according to preferred embodiments of the present invention include an encryption module, which encrypts multimedia content, such as a digital broadcast program, and then records the encrypted multimedia content on a storage medium, and the encryption module includes a key processing unit and a data processing unit. Thus, the multimedia devices according to preferred embodiments of the present invention can protect the multimedia content from hacking threats by minimizing the possibility of an encryption key being exposed to the outside.

Encryption and decryption methods according to embodiments of the present invention will now be described more fully with reference to the structure of the multimedia device according to the present invention.

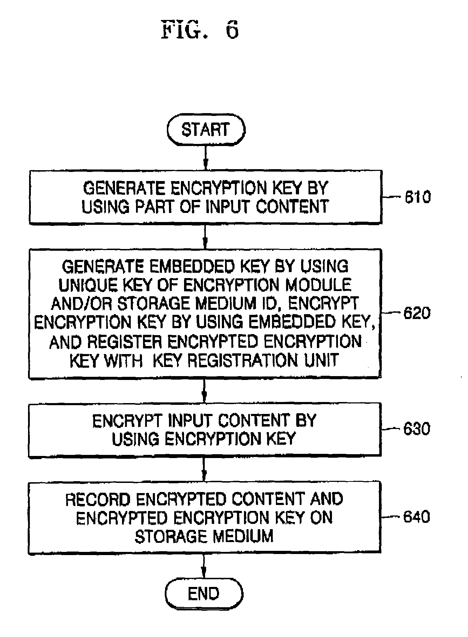

FIG 6 is a flowchart of an encryption method according to an embodiment of the present invention. Referring to FIG. 6, in operation 610, an encryption key, which is necessary for encrypting content, is generated in order to record the content on a storage medium. In order to prevent a sequence of numbers with a discernible pattern in the numbers from being generated as the encryption key, part of the content is used as a seed for an RNG. In operation 620, a multimedia device encrypts the encryption key and then registers the encrypted encryption key with a key registration unit thereof. When encrypting the encryption key, the multimedia device uses an embedded key. As described above, the embedded key is generated by using a unique key of an encryption module and/or a storage medium ID. Accordingly, it is possible to guarantee a variety in embedded keys using the unique key of the encryption or/or the storage medium ID. In operation 630, the content is encrypted with the encryption key generated in operation 610. As described above, the content may be encrypted in various manners. In operation 640, the encryption key encrypted in 620 and the content encrypted in operation 630 are recorded together on the storage medium. Operations 620 and 630 may be performed at the same time. The encryption module is realized as hardware to enhance its operating speed and the security of the content. Since the encryption key and the content are processed together in the encryption module, it is possible to efficiently protect the content by preventing the encryption key from being exposed to the outside of the encryption module.

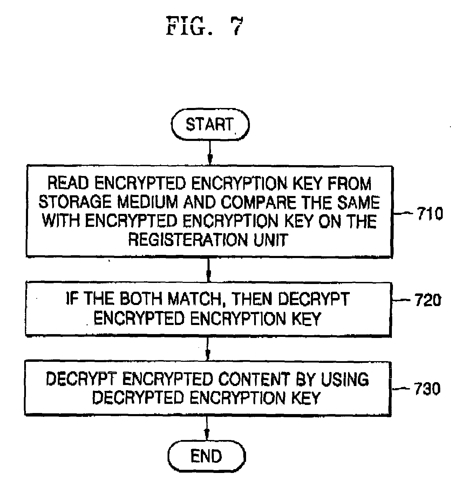

FIG 7 is a flowchart of a decryption method according to an embodiment of the present invention. Referring to FIG. 7, in operation 710, an encrypted encryption key is read from a storage medium and then is compared with an encrypted encryption key registered in a key registration unit in order to confirm the right to reproduction of content encrypted with the encrypted encryption key read from the storage medium and is recorded on the storage medium. In operation 720, if the encrypted encryption key read from the storage medium and the encrypted encryption key registered in the key registration unit match, a multimedia device decrypts the encrypted encryption key read from the storage medium. When decrypting the encrypted encryption key read from the storage medium, the multimedia device must use the same embedded key that was used to encrypt the decrypted encryption key. In operation 730, the multimedia device reads the content from the storage medium and then decrypts the content with the decrypted encryption key. After decrypted, the content is reproduced by using a reproduction unit (not shown) of the multimedia device.

As described above, the multimedia device having an encryption module, according to preferred embodiments of the present invention, can prevent an encryption key from being exposed to the outside.

In other words, the encryption module, which includes a key processing unit and a data processing unit, can generate the encryption key and encrypt content with the encryption key, independently of an external device, such as a CPU. In addition, the encryption module encrypts the encryption key before transmitting the encryption key to the CPU to record the encryption key on a storage medium. Therefore, it is possible to protect the content and the encryption key from hacking threats by preventing the encryption key from being exposed to the outside of the encryption module.

Moreover, an embedded key, which is used to encrypt the encryption key, is generated using a unique value of the encryption module and/or a unique value of the storage medium. Thus, it is possible to generate a variety of encryption keys each comprised of a sequence of genuine random numbers using part of the content as a seed value for an RNG.

While the present invention has been particularly shown and described with reference to exemplary embodiments thereof, it will be understood by those of ordinary skill in the art that various changes in form and details may be made therein without departing from the spirit and scope of the present invention as defined by the following claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A multimedia device having an encryption module (1), comprising:
a key processing unit (310) to generate an encryption key; and
a data processing unit (320) to encrypt and/or decrypt content with the encryption key,
wherein both the key processing unit and the data processing unit are located In the encryption module.

2. The multimedia device of claim 1 further comprising:
a storage medium(330), on which the content encrypted with the encryption key is recorded; and
a controller (300) which controls recording/reproducing the content on/from the storage medium.

3. The multimedia device of claim 1 or daim 2, wherein the key processing unit (310) generates the encryption key using part of the content as a seed value for generating a random number or a sequence of random numbers.

4. The multimedia device of any preceding claim, wherein the key processing unit (310) transmits the encryption key to the data processing unit (320), and the data processing unit encrypts the content with the encryption key received from the key processing unit.

5. The multimedia device of claim 2, wherein the key processing unit (310) encrypts the encryption key and then registers the encrypted encryption key with a key registration unit (414) in the encryption module (1), and transmits the encrypted encryption key to the controller (300) so that the encrypted encryption key can be recorded on the storage medium (330) to be used later for decrypting the content encrypted with the encryption key.

6. The multimedia device of claim 5, wherein when decrypting the content encrypted with the encryption key, it is determined whether the storage medium (330) is an authorized storage medium by determining through comparison whether an encrypted encryption key that is a match for the encrypted encryption key recorded on the storage medium, is registered in the key registration unit (414).

7. The multimedia device of claim 5 or claim 6, wherein if an encrypted encryption key that is a match for the encrypted encryption key recorded on the storage medium (330) is registered in the key registration unit (414), the key processing unit (310) decrypts the encrypted encryption key, and the data processing unit (320) decrypts the content encrypted with the encryption key by using the decrypted result.

8. The multimedia device of claim 2, wherein the key processing unit (310) encrypts/deorypts the encryption key with an embedded key and records/reads the encryption key encrypted/decrypted with the embedded key on/from the storage medium (330) under control of the controller.

9. The multimedia device of claim 8, wherein the embedded key is generated by using a unique key designated by the encryption module (1), an identifier of the storage medium (330), or a combination thereof.

10. The multimedia device of claim 9, wherein the unique key is a key generated by using a one-time programmable memory.

11. An encryption method which is performed in a multimedia device having an encryption module and which encrypts content, comprising:
generating an encryption key in the encryption module;
encrypting the encryption key in the encryption module;
encrypting the content with the encryption key in the encryption module; and
recording the content encrypted with the encryption key on a storage medium which is separate from the encryption module.

12. The encryption method of claim 11, wherein the encrypting of the encryption key and the encrypting of the content with the encryption key are performed at the same time.

13. The encryption method of claim 11 or claim 12, wherein In the generating of the encryption key, part of the content is used as a seed value for generating a random number or a sequence of random numbers.

14. The encryption method of any one of claims 11-13, wherein in the encrypting of the encryption key, the encryption key is encrypted by using an embedded key.

15. The encryption method of claim 14, wherein the embedded key is generated by using a unique key designated by the encryption module, an identifier of the storage medium, or a combination thereof.

16. The encryption method of claim 15, wherein the unique key is a key generated by using a one-time programmable memory.

17. A decryption method which is performed in a multimedia device having an encryption module and decrypts content recorded on a storage medium, the decryption method comprising:
determining whether the storage medium is an authorized storage medium by determining through comparison whether an encrypted encryption key that is a match for an encrypted encryption key recorded on the storage medium, is registered in the encryption module;
decrypting the encrypted encryption key in the encryption module if the storage medium is an authorized storage medium; and
decrypting the content with the decrypted encryption key.
